# EUROPEAN PATENT SPECIFICATION

(11) **EP 2 444 644 B1**
(45) Date of publication and mention of the grant of the patent: **02.10.2013**
(21) Application number: 10851171.8
(22) Date of filing: 27.08.2010
(51) Int. Cl.: F02D 41/40, F02D 43/00, F02D 45/00

(54) **FUEL INJECTION CONTROL DEVICE OF INTERNAL COMBUSTION ENGINE**
VORRICHTUNG ZUR KRAFTSTOFFINJEKTIONSSTEUERUNG FÜR VERBRENNUNGSMOTOREN
DISPOSITIF DE COMMANDE D'INJECTION DE CARBURANT D'UN MOTEUR À COMBUSTION INTERNE

(43) Date of publication of application: 25.04.2012
(73) Proprietor: TOYOTA JIDOSHA KABUSHIKI KAISHA, Toyota-shi, Aichi-ken, 471-8571 (JP)
(72) Inventor: MATSUNAGA, Akio, Aichi-ken 471-8571 (JP)
(74) Representative: TBK
(86) International application number: PCT/JP2010/064631
(87) International publication number: WO 2012/026038

(56) References cited:
- WO-A1-2009/072234
- WO-A1-2009/139184
- DE-A1-102006 047 180
- JP-A- 2009 293 383
- JP-A- 2009 293 596
- JP-A- 2009 299 490

## Description

### Technical Field

The present invention relates to a fuel injection control apparatus of an internal combustion engine typified by a diesel engine, and more particularly, relates to a fuel injection control apparatus of a compression self-igniting internal combustion engine in which an auxiliary injection can be executed prior to a main injection from a fuel injection valve.

### Background Art

In diesel engines used as automobile engines or the like, it is common practice to control a combustion form in a combustion chamber (in a cylinder) by adjusting a fuel injection timing or a fuel injection amount from a fuel injection valve (hereinafter also referred to as an injector) according to engine revolution, amount of accelerator operation, coolant temperature, intake air temperature, and the like.

Diesel engine combustion, as disclosed in PLT 1 below, is mainly realized by premixed combustion and diffusion combustion. When fuel injection from the injector into the combustion chamber begins, first a combustible mixture is produced by the vaporization and diffusion of fuel (ignition delay period). Next, this combustible mixture self-ignites at about the same time at several places in the combustion chamber, and combustion rapidly progresses (premixed combustion). Further, fuel injection into the combustion chamber continues, so that combustion is continuously executed (diffusion combustion). Thereafter, unburned fuel exists even after fuel injection has ended, so that heat continues to be produced for some period of time (afterburning period).

Also, with respect to the diesel engine, there is a case where auxiliary injection (pilot injection) is executed prior to the main injection. Functions of the auxiliary injection include a function (preheating function) of contributing to in-cylinder preheating according to self-ignition, and a function (premixed function) of, instead of self-ignition, combusting with fuel injected afterwards in the main injection. NOx or soot and the like included in the exhaust can be reduced by appropriately controlling this premixed combustion. As a technology with regards to control of this premixed combustion is described in, for example, PLT 2 below. In the technology described in this PLT 2, the injection time of the auxiliary injection (pilot injection) is controlled such that in an area where emissions of unburned HC (hydrocarbon) are high, HC is reduced by diffusion combustion, while in an area where emissions of unburned HC are low, generation of smoke is suppressed by premixed combustion.

### Prior Art Reference

### Patent Documents

PTL 1: JP 2004-156519A
PTL 2: JP 2000-352344A

### Disclosure of the Invention

### Problems to be Solved by the Invention

Incidentally, regarding premixed combustion, its ignition time or combustion amount (heating value) greatly varies according to in-cylinder gas states (pressure, temperature, and the like). In conventional premixed combustion control, no consideration has been paid to the in-cylinder gas states and the like, and therefore, in the transitional period of operation and the like, fuel injected in the auxiliary injection is ignited immediately after injection, creating a possibility of no premixed gas existing at the time of the main injection. Also, there is a possibility of great variation in the ignition delay of premixed combustion.

The present invention has been achieved in view of the above circumstances, and it is an object of the present invention to provide, with respect to a fuel injection control apparatus of a compression self-igniting interval combustion engine in which auxiliary injection can be executed prior to the main injection, control that can achieve appropriate premixed combustion by the auxiliary injection.

### Means of Solving the Problems

### -Principle of Solution to the Problems-

The principle of solution of the present invention to achieve the above object is such that a fuel injection amount of the auxiliary injection is obtained from a preheating combustion fuel amount for satisfying a required ignition temperature of the main injection and a premixed combustion fuel amount for reducing exhaust emissions. Then, a preheating combustion period is obtained based on the preheating combustion fuel amount in accordance with an in-cylinder gas state and/or a fuel spray state, and an injection time (injection start time) of the auxiliary injection is determined based on the preheating combustion period and a required ignition time of the main combustion, so that an end time of the preheating combustion period matches an ignition time of the main combustion.

### -Solution Means-

Specifically, according to one aspect of the present invention, a fuel injection control apparatus is applied to control of a compression self-igniting internal combustion engine in which fuel injected into a cylinder from a fuel injection valve combusts in the cylinder, and is capable of performing at least a main injection for main combustion and an auxiliary injection executed prior to the main injection, as operations of fuel injection from the fuel injection valve. The fuel injection control apparatus includes an auxiliary injection fuel amount calculating unit, a preheating combustion period calculating unit, and an auxiliary injection time determining unit. The auxiliary injection fuel amount calculating unit is configured to obtain a fuel injection amount of the auxiliary injection from a preheating fuel amount for satisfying a required ignition temperature of the main injection and a premixed combustion fuel amount for reducing exhaust emissions. The preheating combustion period calculating unit is configured to obtain a preheating combustion period based on the preheating fuel amount in accordance with at least any one state of an in-cylinder gas state before fuel injection and a fuel spray state. The auxiliary injection time determining unit is configured to determine an injection start time of the auxiliary injection based on a required ignition time of the main combustion, the preheating combustion period, and an ignition delay period ranging from fuel injection in the auxiliary injection to occurrence of ignition (ignition delay period of the auxiliary injection). More specifically, an ignition time of the auxiliary combustion (auxiliary injection) is obtained so that an end time of the preheating combustion period (start time of premixed combustion) matches a required ignition time of the main combustion. The injection start time of the auxiliary injection is established as a time advanced to the ignition time of the auxiliary combustion by the ignition delay period of the auxiliary injection.

In the aspect of the present invention, the premixed combustion fuel amount is preferably determined in consideration of a reduction of soot and a reduction of combustion noise.

With the aspect of the present invention, the fuel ignition amount of the auxiliary injection (total input fuel amount) is obtained from a preheating fuel amount for satisfying a required ignition temperature (for example, 1000K) of the main injection and a premixed combustion fuel amount for reducing exhaust emissions. This ensures simultaneous fulfillment of the demands of securement of a required preheating amount associated with the auxiliary injection, and of the reduction of exhaust emissions such as the reduction of soot.

Moreover, the preheating combustion period, which is used when the injection start time of the auxiliary injection is determined, is obtained in consideration of at least any one state of an in-cylinder gas state before fuel injection (at the time of closing an intake valve) and a fuel spray state. This ensures that even during a transitional period of operation and the like, an end time of the preheating combustion period (premixed combustion start time) matches a required ignition time of the main combustion. This ensures constant appropriateness of the premixed combustion and leads to reduction of exhaust emissions and stability of combustion.

In this respect, parameters relating to the above-described in-cylinder gas state may include in-cylinder gas pressure, an in-cylinder gas temperature, and an in-cylinder oxygen concentration. Also, parameters relating to the fuel spray state may include fuel injection pressure and a fuel atomization degree.

In the aspect of the present invention, as a specific configuration of the preheating combustion period calculating unit, the preheating combustion period calculating unit may be configured to obtain a basic preheating combustion period from the preheating fuel amount, and configured to correct the basic preheating combustion period in accordance with at least any one state of the in-cylinder gas state and the fuel spray state, so as to obtain the preheating combustion period. In this case, the preheating combustion period calculating unit may be configured to obtain a correction coefficient relating to the gas state from a reference in-cylinder gas state specified in advance and an actual in-cylinder gas state, and configured to obtain a correction coefficient relating to the spray state from a reference fuel spray state specified in advance and an actual fuel spray state. Then, the preheating combustion period calculating unit may be configured to multiply the basic preheating combustion period obtained from the preheating fuel amount by the correction coefficient relating to the gas state and the correction coefficient relating to the spray state, so as to obtain the preheating combustion period.

Applying such configurations ensures that the preheating combustion period is obtained with high precision, and the injection start time of the auxiliary injection, which is determined based on the preheating combustion period, is also obtained with high precision. Also, since an appropriate preheating combustion period can be obtained using relatively simple arithmetic operations such as multiplying the correction coefficients by the basic preheating combustion period, the time required for these arithmetic operations is reduced.

It is noted that the preheating combustion period may be obtained only in accordance with the in-cylinder gas state based on the preheating fuel amount. In this case, a correction coefficient is obtained from a reference in-cylinder gas state specified in advance and an actual in-cylinder gas state, and the basic preheating combustion period is multiplied by this correction coefficient relating to the gas state, so as to obtain the preheating combustion period. Also, the preheating combustion period may be obtained only in accordance with the fuel spray state based on the preheating fuel amount. In this case, a correction coefficient is obtained from a reference fuel spray state specified in advance and an actual fuel spray state, and the basic preheating combustion period is multiplied by this correction coefficient relating to the spray state, so as to obtain the preheating combustion period.

In the aspect of the present invention, the ignition delay period of the auxiliary injection, which is used for determining the injection start time of the auxiliary injection, is preferably set in accordance with the in-cylinder gas state before fuel injection (at the time of closing an intake valve). This ensures that even during a transitional period of operation and the like, the ignition delay period of the auxiliary injection is obtained with high precision, and that the injection start time of the auxiliary injection, which is determined based on the ignition delay period, is obtained with high precision.

Another specific means of the present invention can be exemplified as follows.

First, an injection end time of the auxiliary injection is obtained from the injection start time of the auxiliary injection determined by the auxiliary injection time determining unit and from an injection period that is based on the fuel injection amount of the auxiliary injection obtained by the auxiliary injection fuel amount calculating unit. An injection start time of the main injection is obtained from the required ignition time of the main combustion and an ignition delay period of the main combustion. Then, a required injection interval, which is between the injection start time of the auxiliary injection and the injection start time of the main combustion and which results from the foregoing arithmetic operations, is compared with an injection-system restriction injection stop interval that is necessary from an injection end time of the auxiliary injection to an injection start time of the main injection in an actual fuel injection. When the required injection interval is shorter than the injection-system restriction injection stop interval, at least any one state of the in-cylinder gas state and the fuel spray state is adjusted so as to increase an actual preheating combustion period (so that an end time point of the preheating combustion period matches a required combustion time of the main combustion). More specifically, when the required injection interval is shorter than the injection-system restriction injection stop interval, any one parameter, or a combination of more than one parameters, selected from the group of the in-cylinder gas pressure, the in-cylinder gas temperature, the in-cylinder oxygen concentration, and the fuel injection pressure is adjusted so as to increase the actual preheating combustion period.

Applying this configuration ensures an appropriate preheating amount and appropriate premixed combustion for the ignition time of the main combustion while securing precision of injection-system parts and protecting a drive circuit for injection pulse output.

It is noted that the term "injection-system restriction injection stop interval" refers to an injection stop period that is associated with injection characteristics (shortest period from when the fuel injection valve is closed until the valve starts opening) and that is necessary for securing the precision of injection-system parts such as the fuel injection valve, and for protecting a drive circuit that outputs an injection pulse.

### Effects of the Invention

According to the aspect of the present invention, the preheating combustion period is obtained based on the preheating combustion fuel amount for satisfying a required ignition temperature of the main injection in accordance with the in-cylinder gas state and/or the fuel spray state, and an injection time of the auxiliary injection is determined based on the preheating combustion period and a required ignition time of the main combustion. This ensures appropriate premixed combustion even during a transitional period of operation and the like.

### Brief Description of Drawings

[fig. 1] FIG. 1 is a schematic configuration diagram of an engine and a control system for the same to which an embodiment of the present invention is applied.
[fig. 2] FIG. 2 is a cross-sectional view of a combustion chamber of a diesel engine and its peripherals.
[fig. 3] FIG. 3 is a block diagram illustrating a configuration of a control system such as an ECU.
[fig. 4] FIG. 4 is a schematic view of an intake-exhaust system and a combustion chamber illustrating an outline of combustion form in the combustion chamber.
[fig. 5] FIG. 5 shows waveform diagrams of change in heat production rate (heat production amount per unit rotation angle of a crankshaft), and change in fuel injection rate (fuel injection amount per unit rotation angle of the crankshaft) in an expansion process period.
[fig. 6] FIG. 6 is a graph showing a relationship between an input fuel amount of the auxiliary injection and a combustion period.
[fig. 7] FIG. 7 is a flowchart showing one example of determination processing of fuel amount and injection time of the auxiliary injection.
[fig. 8] FIG. 8 shows diagrams of a required ignition time of the main combustion, preheating combustion period, injection time of the auxiliary injection, and the like.
[fig. 9] FIG. 9 is a graph showing a relationship between a required ignition temperature and a required preheating amount of the main combustion.
[fig. 10] FIG. 10 is a graph showing a relationship among premixed combustion fuel amount(premixed amount), soot, and combustion noise.
[fig. 11] FIG. 11 is a map to obtain a basic preheating combustion period.
[fig. 12] FIGs. 12 are maps to obtain correction coefficients to calculate a combustion period: (a) is a gas pressure correction coefficient map, (b) is a gas temperature correction coefficient map, (c) is an oxygen concentration correction coefficient map, (d) is an injection pressure correction coefficient map, and (e) is an atomization degree correction coefficient map.
[fig. 13] FIG. 13 is a flowchart showing one example of fuel injection control.

### Description of the Embodiments

Embodiments of the present invention will be described below with reference to the drawings. In the present embodiment, description will be given with regard to a case where the present invention is applied to a common rail in-cylinder direct injection multi-cylinder (for example, inline four-cylinder) diesel engine (compression self-igniting internal combustion engine) mounted in an automobile.

### -Engine Configuration-

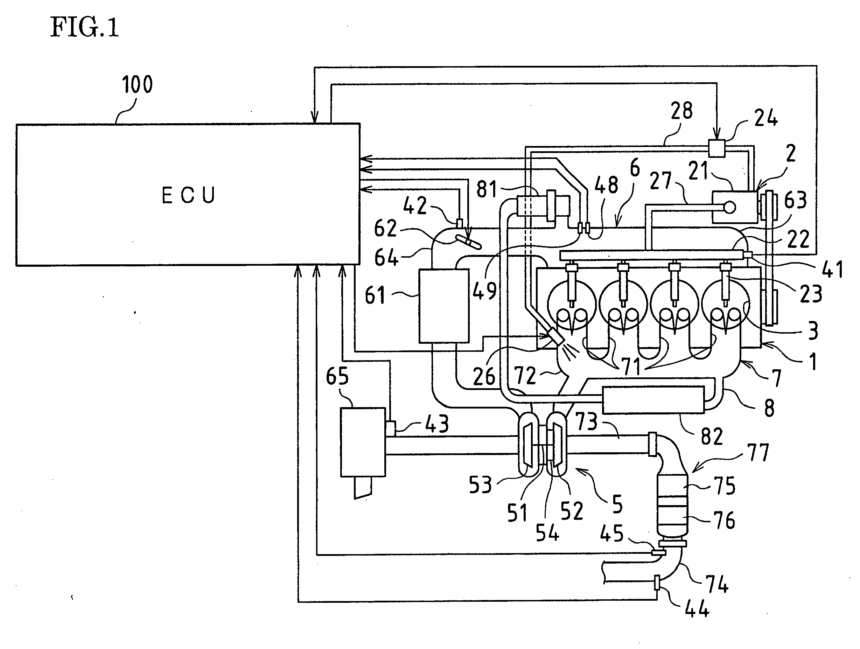

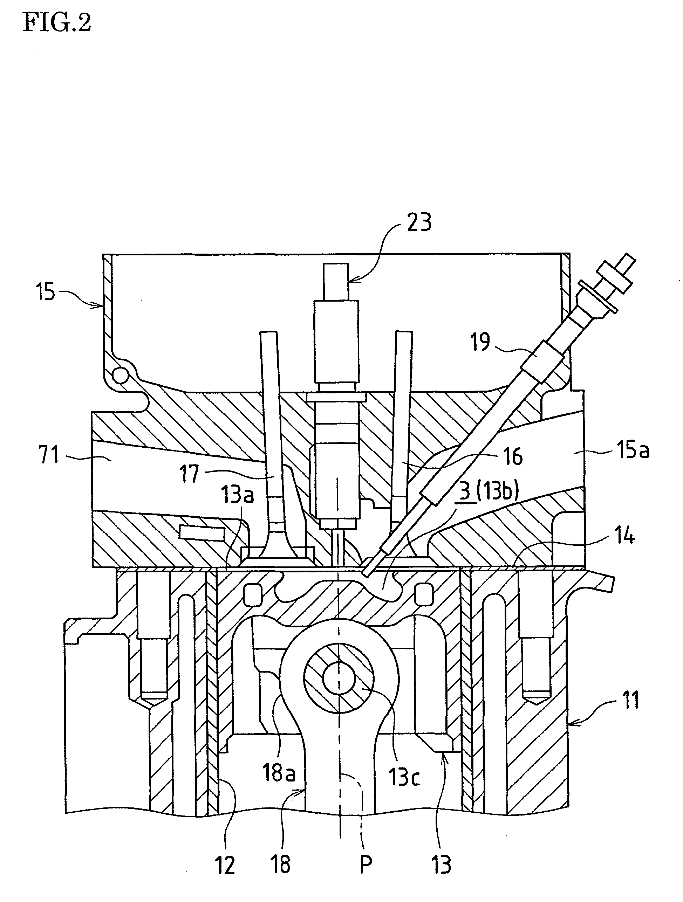

First, one example of a diesel engine (hereinafter referred to simply as an engine) to which an embodiment of the present invention is applied will be described. FIG. 1 is a schematic view of an engine 1 and its control system. FIG. 2 is a cross-sectional view of a combustion chamber 3 of the diesel engine and peripheral parts of the combustion chamber 3.

As shown in FIG. 1, the engine 1 of this example is configured as a diesel engine system including, as main units, a fuel supply system 2, combustion chambers 3, an intake system 6, an exhaust system 7, and the like.

The fuel supply system 2 includes a supply pump 21, a common rail 22, injectors (fuel injection valves) 23, a cutoff valve 24, a fuel addition valve 26, an engine fuel path 27, an added fuel path 28,and the like.

The supply pump 21 draws fuel from a fuel tank, and after putting this drawn fuel under high pressure, supplies that fuel to the common rail 22 via the engine fuel path 27. The common rail 22 has a function as an accumulation chamber where high pressure fuel supplied from the supply pump 21 is held (accumulated) at a predetermined pressure, and distributes this accumulated fuel to each injector 23. The injectors 23 are configured as piezo injectors in each of a piezoelectric element (piezo element) is disposed and which supply fuel by injection into the combustion chambers 3 by appropriately opening a valve. The details of control of fuel injection from the injectors 23 will be described later.

Also, the supply pump 21 supplies part of the fuel drawn from the fuel tank to the fuel addition valve 26 via the added fuel path 28. In the added fuel path 28, the above-described cutoff valve 24 is disposed in order to stop fuel addition by cutting off the added fuel path 28 during an emergency.

Also, the fuel addition valve 26 is configured as an electronically controlled opening/closing valve whose valve opening time is controlled with an addition control operation by an ECU 100, described later, such that the amount of fuel added to the exhaust system 7 is a target addition amount (an addition amount such that the exhaust A/F equals the target A/F), and such that a fuel addition timing is a predetermined timing. That is, a desired amount of fuel from the fuel addition valve 26 is supplied by injection to the exhaust system 7 (to an exhaust manifold 72 from exhaust ports 71) at an appropriate timing.

The intake system 6 includes an intake manifold 63 connected to an intake port 15a formed in a cylinder head 15 (see FIG. 2), and an intake tube 64 constituting an intake path is connected to this intake manifold 63. Also, in this intake path, an air cleaner 65, an airflow meter 43, and a throttle valve (an intake throttle valve) 62 are disposed in this order from the upstream side. The airflow meter 43 outputs an electrical signal corresponding to the amount of air that flows into the intake path via the air cleaner 65.

The exhaust system 7 includes the exhaust manifold 72 connected to the exhaust ports 71 formed in the cylinder head 15, and exhaust tubes 73 and 74 constituting an exhaust path are connected to this exhaust manifold 72. Also, in this exhaust path, a maniverter (exhaust purification apparatus) 77 is disposed that includes an NOx storage catalyst (NSR catalyst: NOx Storage Reduction catalyst) 75 and a DPNR catalyst (Diesel Particulate-NOx Reduction catalyst) 76. These NSR catalyst 75 and DPNR catalyst 76 will be described below.

The NSR catalyst 75 is a storage reduction NOx catalyst and includes, for example, alumina (Al₂O₃) as a support that supports thereon, for example, an alkali metal such as potassium (K), sodium (Na), lithium (Li), and cesium (Cs); an alkaline earth element such as barium (Ba) and calcium (Ca); a rare earth element such as lanthanum (La) and Yttrium (Y); and a precious metal such as platinum (Pt).

The NSR catalyst 75 stores NOx in a state in which a large amount of oxygen is present in the exhaust, while reducing NOx to NO₂ or NO to release NOx in a state in which the oxygen concentration in the exhaust is low and a large amount of a reduction component (for example, an unburned component (HC) of fuel) is present. NOx released as NO₂ or NO is further reduced to N₂ due to quick reaction with HC or CO in the exhaust. Also, by reducing NO₂ or NO, HC and CO themselves are oxidized and thus become H₂O or CO₂. That is, by appropriately adjusting the oxygen concentration or the HC component in the exhaust introduced to the NSR catalyst 75, it is possible to purify HC, CO, and NOx in the exhaust. In the configuration of the present embodiment, the oxygen concentration and the HC component in the exhaust can be adjusted with the operation of adding fuel from the fuel addition valve 26.

Meanwhile, the DPNR catalyst 76 includes, for example, a porous ceramic structure that supports an NOx storage reduction catalyst, so that PM in exhaust gas is captured when passing through a porous wall. When the air-fuel ratio of the exhaust gas is lean, NOx in the exhaust gas is stored in the NOx storage reduction catalyst, while when the air-fuel ratio is rich, the stored NOx is reduced and released. Furthermore, the DPNR catalyst 76 supports a catalyst that oxidizes/burns the captured PM (for example, an oxidization catalyst whose main component is a precious metal such as platinum).

Now, the configuration of the combustion chamber 3 of the diesel engine and peripheral parts of the combustion chamber 3 will be described with reference to FIG. 2. As shown in FIG. 2, in a cylinder block 11 constituting part of the main body of the engine, a cylindrical cylinder bore 12 is formed in each of the cylinders (four cylinders), and each cylinder bore 12 vertically slidably accommodates a piston 13.

The combustion chamber 3 is formed on the top side of a top face 13a of the piston 13. That is, the combustion chamber 3 is defined by a lower face of the cylinder head 15 installed on top of the cylinder block 11 via a gasket 14, an inner wall face of the cylinder bore 12, and the top face 13a of the piston 13. In approximately the center of the top face 13a of the piston 13, a cavity (a recess) 13b is disposed in the form of a depression, and the cavity 13b also constitutes part of the combustion chamber 3.

The shape of the cavity 13b is such that the size of depression at the center portion (on a cylinder center line P) is small and gradually increases toward the outer peripheral side. That is, as shown in FIG. 2, when the piston 13 is adjacent to its compression top dead center, the combustion chamber 3 defined by the cavity 13b has a small portion of space of relatively small capacity at the center portion, and a gradually expanded portion of space (which is assumed an expanded space) toward the outer peripheral side.

A small end 18a of a connecting rod 18 is linked to the piston 13 via a piston pin 13c, while a large end of the connecting rod 18 is linked to a crankshaft serving as an engine output shaft. This ensures that the reciprocating movement of the piston 13 within the cylinder bore 12 is transmitted to the crankshaft via the connecting rod 18, which causes the crankshaft to rotate to obtain engine output. Also, a glow plug 19 is disposed facing the combustion chamber 3. The glow plug 19 functions as a starting assistance apparatus that glows by receiving a flow of electrical current immediately before the engine 1 is started, and that receives a blow of part of a fuel spray, thus promoting ignition and combustion.

The cylinder head 15 includes the intake port 15a formed to introduce air to the combustion chamber 3, the exhaust port 71 formed to discharge exhaust gas from the combustion chamber 3, an intake valve 16 disposed to open/close the intake port 15a, and an exhaust valve 17 disposed to open/close the exhaust port 71. The intake valve 16 and the exhaust valve 17 are disposed to face one another across the cylinder center line P. That is, the engine 1 of this example is configured as a cross flow-type engine. Also, the injector 23, which injects fuel directly into the combustion chamber 3, is mounted in the cylinder head 15. The injector 23 is disposed in approximately the center above the combustion chamber 3 in upright orientation along the cylinder center line P, and injects fuel introduced from the common rail 22 toward the combustion chamber 3 at a predetermined timing.

Furthermore, as shown in FIG. 1, a supercharger (turbocharger) 5 is disposed in the engine 1. The turbocharger 5 includes a turbine wheel 52 and a compressor impeller 53 that are linked to one another via a turbine shaft 51. The compressor impeller 53 is disposed facing the inside of the intake tube 64, while the turbine wheel 52 is disposed facing the inside of the exhaust tube 73. This ensures that the turbocharger 5 utilizes exhaust flow (exhaust pressure) received by the turbine wheel 52 to rotate the compressor impeller 53, so as to implement what is called a turbocharging operation such as increasing the intake pressure. The turbocharger 5 of this example is a variable nozzle-type turbocharger (VNT), in which a variable nozzle vane mechanism 54 is provided on the turbine wheel 52 side. Adjusting the opening degree (VN opening degree) of the variable nozzle vane mechanism 54 ensures adjustment of the turbocharging pressure of the engine 1.

The intake tube 64 of the intake system 6 includes an intercooler 61 that forcibly cools intake air heated by supercharging with the turbocharger 5. The throttle valve 62 is disposed further downstream than the intercooler 61. The throttle valve 62 is an electronically controlled opening/closing valve whose opening degree is capable of stepless adjustment, and has a function to constrict the area of the path of intake air under predetermined conditions, and thus to adjust (reduce) the supplied amount of intake air.

Also, the engine 1 includes an exhaust gas recirculation path (EGR path) 8 that connects the intake system 6 and the exhaust system 7. The EGR path 8 decreases the combustion temperature by appropriately recirculating part of the exhaust to the intake system 6 and resupplying that exhaust to the combustion chamber 3, thus reducing the amount of NOx generated. Also, provided in the EGR path 8 are an EGR valve 81 that is opened/closed steplessly under electronic control and is capable of freely adjusting the amount of exhaust flow that flows through the EGR path 8, and an EGR cooler 82 for cooling exhaust passing through (recirculating through) the EGR path 8. An EGR apparatus (exhaust gas recirculation apparatus) is constituted by the EGR path 8, the EGR valve 81, and the EGR cooler 82 and the like.

### -Sensors-

Various sensors are mounted on the parts of the engine 1 to output signals related to environmental conditions at each part and the operating state of the engine 1.

For example, the airflow meter 43 outputs a detection signal according to an intake air flow amount (intake air amount) on the upstream of the throttle valve 62 within the intake system 6. An intake temperature sensor 49 is disposed in the intake manifold 63 and outputs a detection signal according to the temperature of intake air. An intake pressure sensor 48 is disposed in the intake manifold 63 and outputs a detection signal according to the intake air pressure. An A/F (air-fuel ratio) sensor 44 outputs a detection signal that continuously changes according to the oxygen concentration in exhaust on the downstream of the maniverter 77 of the exhaust system 7. An exhaust temperature sensor 45 outputs a detection signal according to the temperature of exhaust gas (exhaust temperature) likewise on the downstream of the maniverter 77 of the exhaust system 7. A rail pressure sensor 41 outputs a detection signal according to the pressure of fuel (hereinafter also referred to as fuel pressure) accumulated in the common rail 22. A throttle opening degree sensor 42 detects the opening degree of the throttle valve 62.

### -ECU-

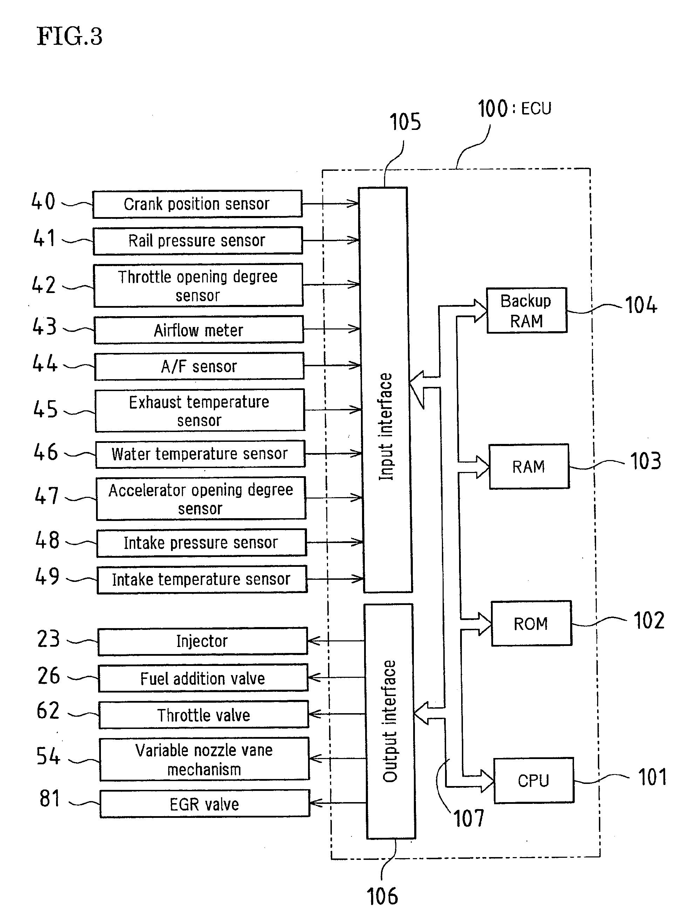

As shown in FIG. 3, the ECU 100 includes a CPU 101, a ROM 102, a RAM 103, a backup RAM 104, and the like. The ROM 102 stores various control programs, maps that are referred to when executing those various control programs, and the like. The CPU 101 executes various arithmetic processes based on the various control programs and maps stored in the ROM 102. The RAM 103 is a memory that temporarily stores results of arithmetic operations with the CPU 101 or data input from the sensors, and the like. The backup RAM 104, for example, is a nonvolatile memory that stores data that needs storing or the like when the engine 1 is stopped.

The CPU 101, the ROM 102, the RAM 103, and the backup RAM 104 above are connected to each other via a bus 107, and are connected to an input interface 105 and an output interface 106.

The rail pressure sensor 41, the throttle opening degree sensor 42, the airflow meter 43, the A/F sensor 44, the exhaust temperature sensor 45, the intake pressure sensor 48, and the intake temperature sensor 49 are connected to the input interface 105. Further connected to the input interface 105 are a water temperature sensor 46 that outputs a detection signal according to the coolant temperature of the engine 1, an accelerator opening degree sensor 47 that outputs a detection signal according to the amount of stepping on an accelerator pedal, a crank position sensor 40 that outputs a detection signal (pulse) at each rotation of an output shaft (crankshaft) of the engine 1 by a predetermined angle, and the like.

Meanwhile, the injector 23, the fuel addition valve 26, the throttle valve 62, the variable nozzle vane mechanism 54, the EGR valve 81, and the like are connected to the output interface 106.

Then, the ECU 100 executes various kinds of control of the engine 1 based on the outputs of the various sensors described above. For example, the ECU 100 executes the control of fuel injection of the injector 23. As the control of fuel injection of the injector 23, auxiliary injection (pilot injection) and main injection (main injection) are executed.

The auxiliary injection is an operation that pre-injects a small amount of fuel prior to the main injection from the injector 23. Also, the auxiliary injection is an injection operation for suppressing an ignition delay of fuel in the main injection, thus leading to stable diffusion combustion. Also, the auxiliary injection according to the present embodiment not only serves the function of suppressing an initial combustion speed in the main injection described above, but also serves a function of preheating to raise the temperature inside the cylinder. That is, after execution of the auxiliary injection, fuel injection is temporarily interrupted, and the temperature of compressed gas (temperature in the cylinder) is adequately increased to reach the fuel self-ignition temperature (for example, 1000K) before the main injection is started. This ensures satisfactory ignition of fuel injected in the main injection.

The main injection is an injection operation for generating torque of the engine 1 (torque-generating fuel supply operation). The amount of injection in the main injection is basically determined according to the operating state, such as engine revolution, amount of accelerator operation, coolant temperature, and intake air temperature, so as to obtain a required torque. For example, a higher engine revolution (engine revolution calculated based on an output signal of the crank position sensor 40) and a greater amount of accelerator operation (amount of stepping on the accelerator pedal detected by the accelerator opening degree sensor 47) (i.e. a greater accelerator opening degree) lead to a higher torque required value of the engine 1 and accordingly allow the fuel injection amount in the main injection to be set higher.

It is noted that, in addition to the auxiliary injection and main injection described above, after-injection or post-injection is executed as needed. The after-injection is an injection operation for increasing the exhaust gas temperature. More specifically, the after-injection is executed at a timing when the combustion energy of fuel supplied is not converted to the torque of the engine 1, but rather, a majority of the combustion energy is obtained as exhaust heat energy. The post-injection is an injection operation for increasing the temperature of the maniverter 77 by directly introducing fuel to the exhaust system 7. For example, the post injection is executed when the deposited amount of PM captured by the DPNR catalyst 76 exceeds a predetermined amount (which is detected by, for example, detecting a difference in pressure between the front and rear of the maniverter 77).

Also, the ECU 100 controls opening degree of the EGR valve 81 according to the operating state of the engine 1, and adjusts an exhaust gas recirculation amount (EGR amount) toward the intake manifold 63. The EGR amount is set in accordance with an EGR map stored in advance in the ROM 102. Specifically, the EGR map is a map to determine the EGR amount (EGR ratio) according to parameters such as engine revolution and engine load. It is noted that the EGR map is produced in advance based on an experiment, a simulation, or the like. That is, the engine revolution calculated based on the output signal of the crank position sensor 40 and the opening degree (corresponding to engine load) of the throttle valve 62 detected by the throttle opening degree sensor 42 are applied to the EGR map, so that the EGR amount (opening degree of the EGR valve 81) is obtained.

### -Fuel Injection Pressure-

The fuel injection pressure during execution of the fuel injection is determined by the internal pressure of the common rail 22. The common rail internal pressure is generally such that the target value of the fuel pressure supplied from the common rail 22 to the injector 23, that is, the target rail pressure, is set to increase as the engine load increases, and as the engine revolution increases. That is, when the engine load is high, a large amount of air is drawn into the combustion chamber 3, so that it is necessary to inject a large amount of fuel into the combustion chamber 3 from the injector 23. This necessitates high injection pressure from the injector 23. When the engine revolution is high, the injectable period during which injection is executable is short, so that it is necessary to inject a large amount of fuel per unit time. This necessitates high injection pressure from the injector 23. Thus, the target rail pressure is generally set based on the engine load and the engine revolution. It is noted that the target rail pressure is set, for example, in accordance with a fuel pressure setting map stored in the ROM 102. That is, determining the fuel pressure in accordance with the fuel pressure setting map ensures control of a valve opening period (injection ratio waveform) of the injector 23, thereby specifying a fuel injection amount during the valve opening period.

It is noted that in the present embodiment, fuel pressure is adjusted between 30 MPa and 200 MPa according to the engine load and the like. That is, the control range of the fuel pressure has a lowest value of 30 MPa and a highest value of 200 MPa.

Fuel injection parameters for the auxiliary injection, the main injection, and the like have optimum values that vary according to the temperature conditions of the engine 1, intake air, and the like.

For example, the ECU 100 adjusts the amount of fuel discharged by the supply pump 21 such that the common rail pressure equals the target rail pressure that is set based on the engine operating state, in other words, such that the fuel injection pressure matches the target injection pressure. Also, the ECU 100 determines the fuel injection amount and the form of fuel injection based on the engine operating state. Specifically, the ECU 100 calculates an engine revolution speed based on the output signal of the crank position sensor 40 and obtains an amount of stepping on accelerator pedal (accelerator opening degree) based on the output signal of the accelerator opening degree sensor 47, and determines the total fuel injection amount (the sum of the injection amount in the auxiliary injection and the injection amount of in the main injection) based on the engine revolution speed and the accelerator opening degree.

### -General Description of Combustion Form-

Next, an outline of combustion form in the combustion chamber 3 of the engine 1 according to the present embodiment will be described.

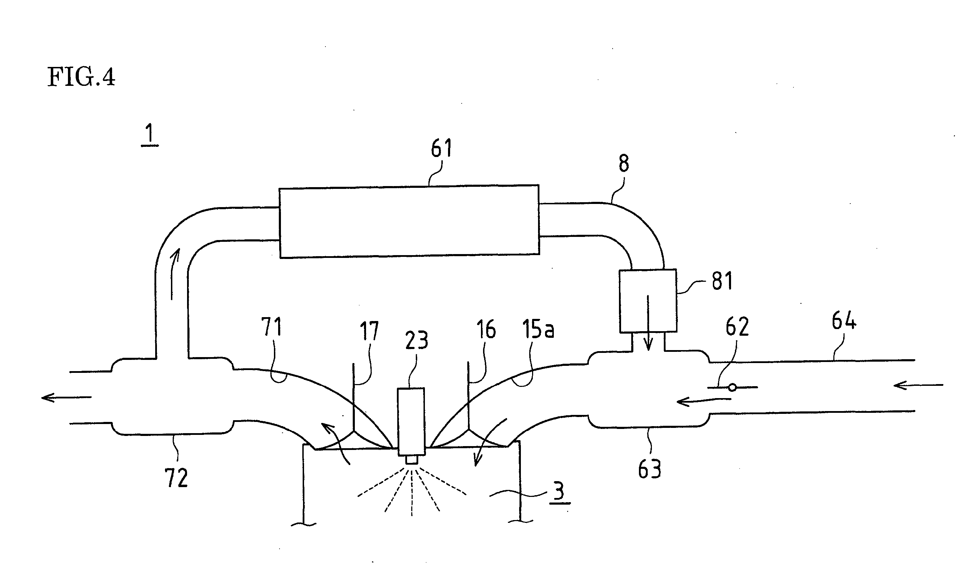

FIG. 4 is a diagram schematically showing a situation where, with respect to one cylinder of the engine 1, gas (air) is drawn into the cylinder via the intake manifold 63 and the intake port 15a, combustion is executed by fuel injection from the injector 23 into the combustion chamber 3, and the gas after the combustion is discharged into the exhaust manifold 72 via the exhaust port 71.

As shown in FIG. 4, gas drawn into the cylinder includes fresh air that is drawn in from the intake tube 64 via the throttle valve 62, and EGR gas that is drawn in from the EGR path 8 when the EGR valve 81 is opened. The ratio (that is, EGR ratio) of the EGR gas amount to the sum of drawn fresh air amount (mass) and drawn EGR gas amount (mass) changes in accordance with the opening degree of the EGR valve 81, which is appropriately controlled by the ECU 100 according to the operating state.

The fresh air and the EGR gas drawn in the cylinder (in the combustion chamber 3) in this manner are drawn into the cylinder via the intake valve 16 that opens during the intake process in accordance with the fall of the piston 13 (not shown in FIG. 4), and thus turns into in-cylinder gas. The in-cylinder gas is sealed (a trapping state of the in-cylinder gas) in the cylinder (in the combustion chamber 3) by closing the intake valve 16 at a valve-closing time determined according to the operating state of the engine 1, and compressed as the piston 13 ascends in the subsequent compression process. Then, when the piston 13 reaches adjacent to its top dead center, a valve of the injector 23 is opened only for a predetermined period of time according to the injection amount control by the ECU 100 described above, so as to directly inject fuel into the combustion chamber 3. Specifically, the auxiliary injection is executed before the piston 13 reaches its top dead center, and after a temporary stop of the fuel injection and an elapse of a predetermined interval, the main injection is executed when the piston 13 reaches near the top dead center.

### -Heat Production Rate Waveform-

In the diesel engine 1, it is important to simultaneously fulfill the demands such as reduction of exhaust emissions by reducing the amount of NOx generated, reduction in combustion noise during the combustion stroke, and securement of sufficient engine torque. As a technique for simultaneous fulfillment of these demands, it is effective to appropriately control the changing state of the heat production rate (changing state represented in the form of a heat production rate waveform) in the cylinder during the combustion stroke.

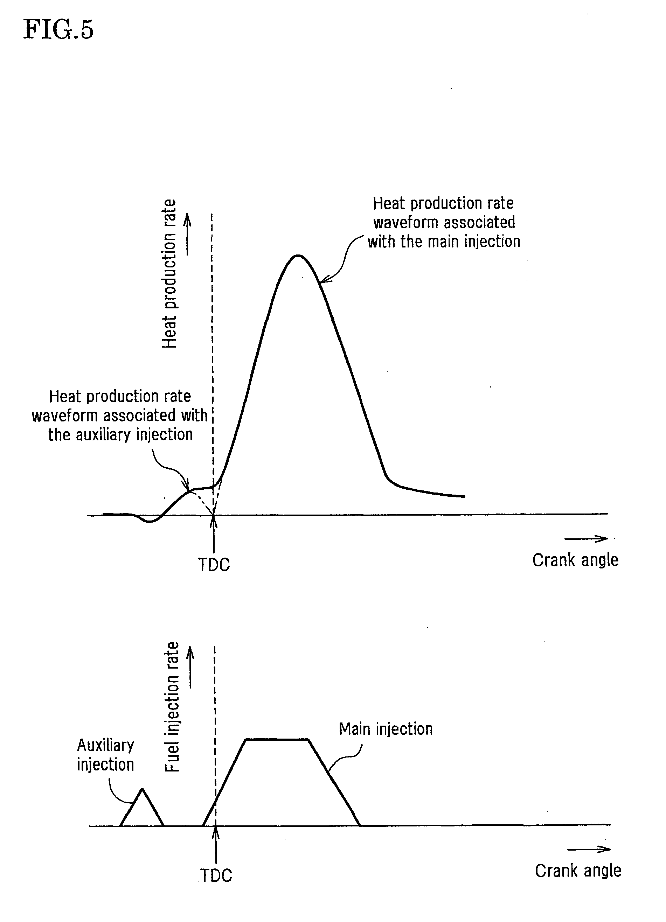

The waveform shown in the upper section of FIG. 5 is an ideal heat production rate waveform regarding the combustion of fuel injected in the auxiliary injection and the main injection, where the horizontal axis represents the crank angle and the vertical axis represents the heat production rate. In this figure, TDC indicates a crank angle position corresponding to the compression top dead center of the piston 13. The waveform shown in the lower section of FIG. 5 is an injection ratio (fuel injection amount per unit rotation angle of the crankshaft) waveform of fuel injected from the injector 23.

In the heat production rate waveform shown in FIG. 5, the combustion of the fuel injected in the main injection is started when the piston 13 is at its compression top dead center (TDC). The heat production rate reaches a maximum value (peak value) at a predetermined piston position after the compression top dead center of the piston 13 (for example, a time point of 10 degrees after compression top dead center (ATDC 10°)). Furthermore, the combustion of the fuel injected in the main injection ends at another predetermined piston position after the compression top dead center (for example, a time point of 25 degrees after compression top dead center (ATDC 25°)). Implementing the combustion of the mixture with this changing state of the heat production rate ensures that the combustion of about 50% of the mixture in the cylinder is complete at a time point of, for example, 10 degrees after combustion top dead center (ATDC 10°). That is, with the time point of 10 degrees (ATDC 10°) after compression top dead center acting as a combustion center of gravity, about 50% of the total amount of heat produced in the combustion stroke is produced no later than ATDC 10°. This ensures high thermal efficiency in operating the engine 1. It is noted that a dashed-dotted line shown in FIG. 5 indicates part of the heat production rate in the combustion of fuel injected in the main injection. A base end portion (an intersection with the crankshaft angle axis with the heat production rate being "0") of the heat production rate waveform shown in the dashed-dotted line is a main combustion start time (diffusion combustion start time). Also, a dashed double-dotted line shown in FIG. 5 indicates part of a heat production rate in preheating combustion.

Also, in the heat production rate waveform shown in FIG. 5, the heat production rate in the combustion of fuel injected in the auxiliary injection is at a predetermined amount (for example, 10 [J/° CA]) at the compression top dead center (TDC) of the piston 13. Accordingly, at the injection timing of the main injection, the temperature in the combustion chamber reaches equal to or higher than an ignitable temperature of the mixture (for example, 1000K). This ensures stable diffusion combustion of fuel injected in the main injection. These values should not be construed in a limiting sense. Also, the auxiliary injection may be executed a plurality of times, and in this case, the temperature in the cylinder is further raised to ensure satisfactory ignitability of fuel injected in the main injection.

In the manner described above, in the present embodiment, the interior of the cylinder is adequately preheated by the auxiliary injection. The preheating ensures that when the main injection starts, fuel injected in the main injection is exposed to a temperature environment of equal to or higher than a self-ignition temperature, after injection of the fuel, and thus thermolysis progresses and diffusion combustion starts.

### -Determination Processing of Fuel Amount and Injection Time of Auxiliary Injection-

Next, one example of the determination processing of fuel amount and injection time of the auxiliary injection will be described.

First, when fuel is input into a cylinder in the auxiliary injection, if all of the fuel input in the auxiliary injection is introduced as heat to the gas in the cylinder (in the combustion chamber 3) before an ignition time of the main combustion (the time when combustion of fuel injected in the main injection starts), then unburned fuel (premixed combustion fuel for the auxiliary injection) no longer exists in the cylinder.

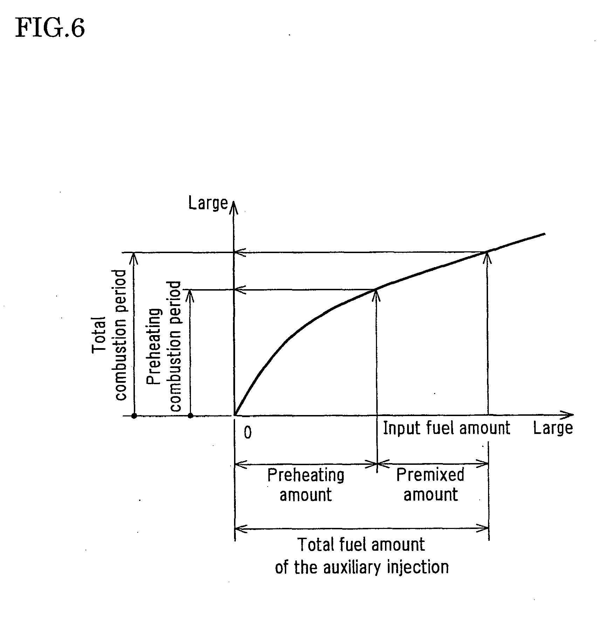

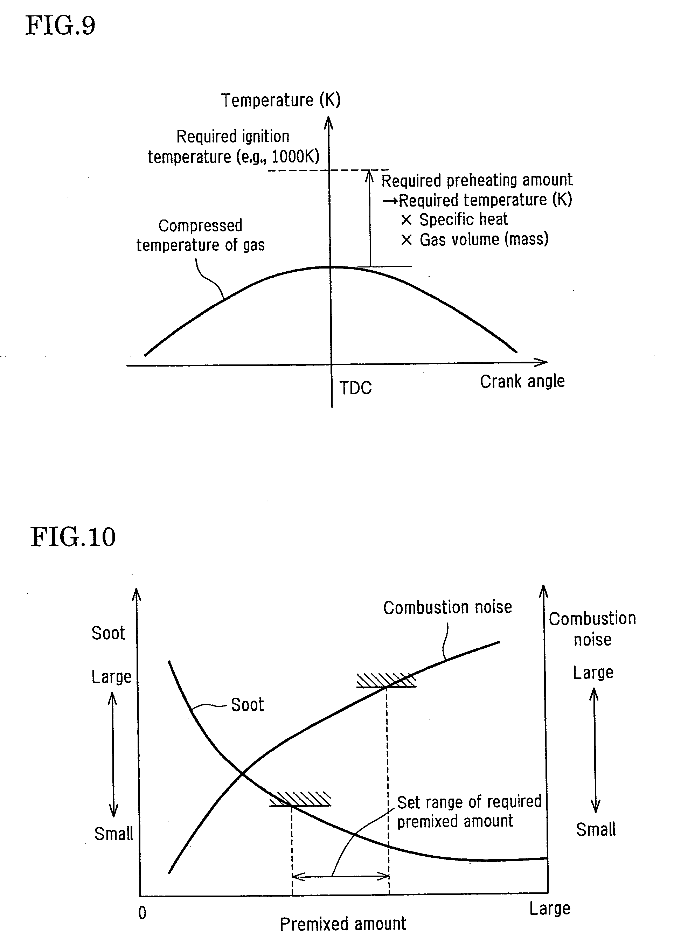

By contrast, appropriate premixed combustion can be is provided to the main combustion by starting the auxiliary injection in such a manner that a time when combustion of fuel for the auxiliary injection (preheating combustion) has advanced to produce a required preheating amount, described later, (required ignition temperature - gas compression temperature: see FIG. 9) of the main combustion coincides with the ignition time of the main combustion. In this respect, when premixed combustion exists in combustion by the auxiliary injection (auxiliary combustion), there is a relationship, as exemplified in FIG. 6, between: a preheating combustion fuel amount (preheating fuel amount) with a total fuel amount of the auxiliary injection (preheating fuel amount + premixed fuel amount (input fuel amount of premixed combustion)); and a preheating combustion period with an auxiliary-injection total combustion period. Hence, appropriate premixed combustion can be achieved by obtaining the preheating combustion period shown in FIG. 6 from the required preheating amount (required value of fuel amount that is necessary for preheating), and by controlling the injection start time of the auxiliary injection so that the end point of the required preheating combustion period matches the required ignition time of the main injection.

In this example, appropriate premixed combustion is achieved by determining the injection time of the auxiliary injection, with focusing on the above-mentioned relationship between the preheating combustion period and the ignition time of the main combustion and considering the fact that the ignition time and combustion amount (heating amount) of the premixed combustion greatly vary depending on in-cylinder gas states (pressure, temperature, oxygen concentration) and the like.

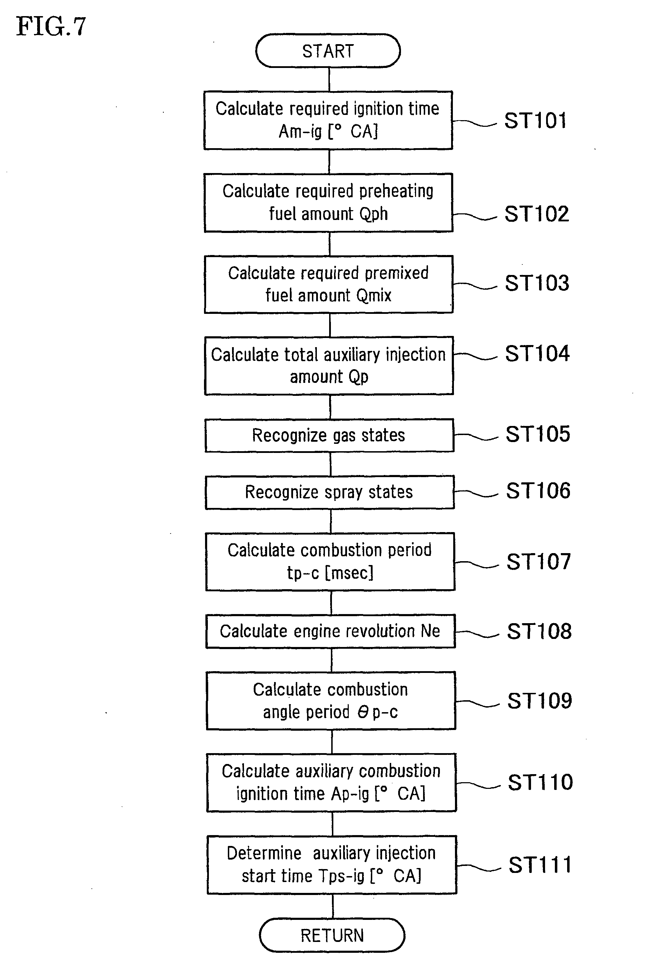

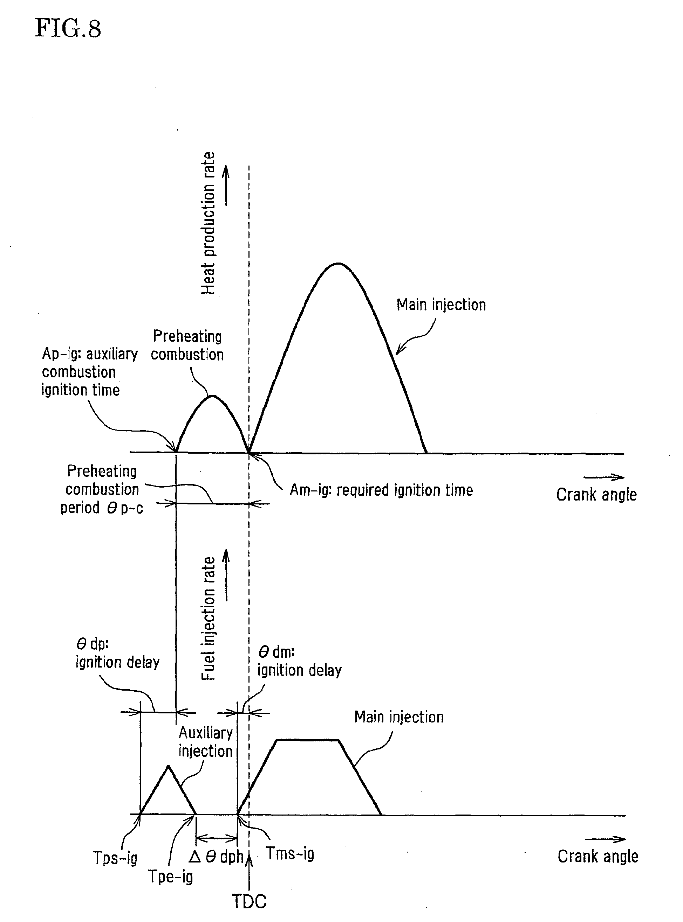

A specific example of the processing will be described by referring to a flowchart of FIG. 7 and referring to FIG. 8. A control routine of FIG. 7 is repeatedly executed for each predetermined crank angle (each cylinder) in the ECU 100. To be specific, taking one cylinder as an example, each time the combustion stroke in the cylinder is executed, the control routine of FIG. 7 is executed prior to the combustion stroke.

When the control routine of FIG. 7 starts, a required ignition time Am-ig [° CA] of the main combustion (main injection) shown in FIG. 8 is calculated with reference to a map at step ST101.

The map for calculating the required ignition time Am-ig of the main combustion is a mapping of values (crank angles) empirically adapted by experiments, calculations, and the like,using gas states (pressure, temperature, oxygen concentration) in the cylinder (in the combustion chamber 3) as parameters, in consideration of reduction in the amount of NOx generated and the fuel consumption rate (fuel consumption). The map is stored, for example, in the ROM 102 of the ECU 100. The map used for calculating the required ignition time is, for example, such that when the fuel consumption rate is minimal, the required ignition time of the main combustion is set at the vicinity of TDC, and that as the NOx reduction requirement increases, the required ignition time of the main combustion is set at values on the delay angle side relative to TDC. In the example of FIG. 8, the required ignition time Am-ig [° CA] of the main combustion is set at TDC.

At step ST102, the required preheating amount (see FIG. 9) is obtained, and a required preheating fuel amount (required value of preheating fuel amount) Qph is calculated.

In this respect, the required preheating amount is a heat amount (in a case where an increase in temperature by compression alone is insufficient) that is necessary to reach a gas temperature (temperature immediately before injection) with a minimum ignition delay to the required ignition temperature when the auxiliary injection is executed based on the gas temperature immediately before injection, which is determined by a gas temperature at the time of closing the intake valve 16. In this context, the required ignition temperature (for example, 1000K) is provided as a basic characteristic of combustion at the required ignition time (for example, TDC) of the main combustion. The required preheating amount can be obtained, as shown in FIG. 9, by a multiplication [required temperature × specific heat × gas volume], wherein: the required temperature[K] is a difference between the required ignition temperature (for example, 1000K) of the main combustion and the gas compression temperature (compression end temperature by compression alone); the specific heat is a gas specific heat(mixture specific heat); and the gas volume is a mixture volume. Then, the required preheating fuel amount Qph can be calculated from these required preheating amount and fuel heat amount.

It is noted that the gas specific heat used for calculating the required preheating amount is specific heat of a gas composition constituting the mixture and a material in a liquid phase, and is calculated based on a map or a mathematical formula for obtaining the gas specific heat with the density of the mixture and the like used as parameters.

At step ST103, a required premixed fuel amount (required value of premixed combustion fuel amount) Qmix is calculated. The required premixed fuel amount (also referred to as a required premixed amount) Qmix is a required value in consideration of a premixed combustion input fuel amount that is necessary to optimize soot with NOx uniform (NOx = constant), and also in consideration of an upper limit amount (required value) of the premixed combustion input fuel amount to optimize combustion noise. For example, the required premixed fuel amount Qmix is a value in a set range of required premixed amount shown in FIG. 10. It is noted that the required premixed fuel amount Qmix may be calculated with a map in which the required soot amount and the upper limit value (required value) of combustion noise are used as parameters (for example, a map that maps values (premixed fuel amounts) in a set range of the required premixed amount shown in FIG. 10).

At step ST104, a fuel injection amount of the auxiliary injection (total auxiliary injection amount) Qp [Qp = Qph + Qmix] is calculated by adding the required preheating fuel amount Qph calculated at step ST102 to the required premixed fuel amount Qmix calculated at step ST103.

At step ST105, the gas states (pressure, temperature, oxygen concentration) in the cylinder at the time of closing the intake valve 16 (before fuel injection) are recognized (calculated) in the manner described below.

### •In-Cylinder Gas Pressure

In-cylinder gas pressure is calculated from a map or a mathematical formula based on the total amount of gas flown into a cylinder (combustion chamber 3) at the time of closing the intake valve 16. Additionally, the in-cylinder gas pressure may be calculated from an output signal of an in-cylinder pressure sensor that may be provided to detect a change in in-cylinder pressure, or the in-cylinder gas pressure may be calculated from an output signal of a pressure sensor that may be provided to detect internal pressure of the injector 23.

### •In-Cylinder Gas Temperature

An in-cylinder gas temperature can be obtained by utilizing an intake temperature obtained from an output signal of the intake temperature sensor 49 at the time of closing the intake valve 16, or reading out from an intake temperature assumption map (map to assume an intake temperature from ambient temperature, the operating state of the engine; and the like) stored in advance in the ROM 102 of the ECU 100.

### •In-Cylinder Oxygen Concentration

An in-cylinder oxygen concentration is calculated from, for example, the EGR ratio (ratio of the EGR gas amount) at the time of closing the intake valve 16.

At step ST106, fuel spray states (fuel injection pressure, fuel atomization degree) at the time of the auxiliary injection are recognized. Specifically, the fuel injection pressure is recognized from an output signal of the rail pressure sensor 41. The fuel atomization degree (SMD: Sauter's mean diameter) is calculated with a map or a mathematical formula based on the fuel injection pressure, injector characteristics (injection hole diameter, injection hole length) and the like.

At step ST107, a preheating combustion period tp-c [msec] is calculated using in-cylinder gas states (gas temperature, gas pressure, oxygen concentration) recognized at step ST105 and fuel spray states (fuel injection pressure, fuel atomization degree) recognized at step ST106. That specific processing will be described below.

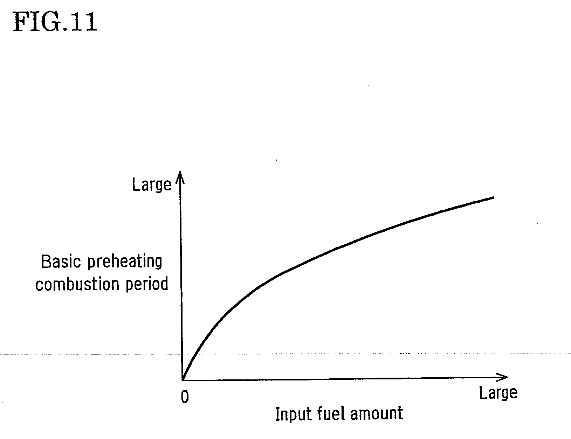

(s1) A basic preheating combustion period tbas [msec] is calculated with reference to a map shown in FIG. 11 based on the required preheating fuel amount (required value of the preheating input fuel amount) Qph. The calculation map for the basic preheating combustion period is a mapping of values to which combustion periods [msec] are adapted by experiments, calculations, and the like using the preheating input fuel amount as a parameter. The calculation map is stored in the ROM 102 of the ECU100.

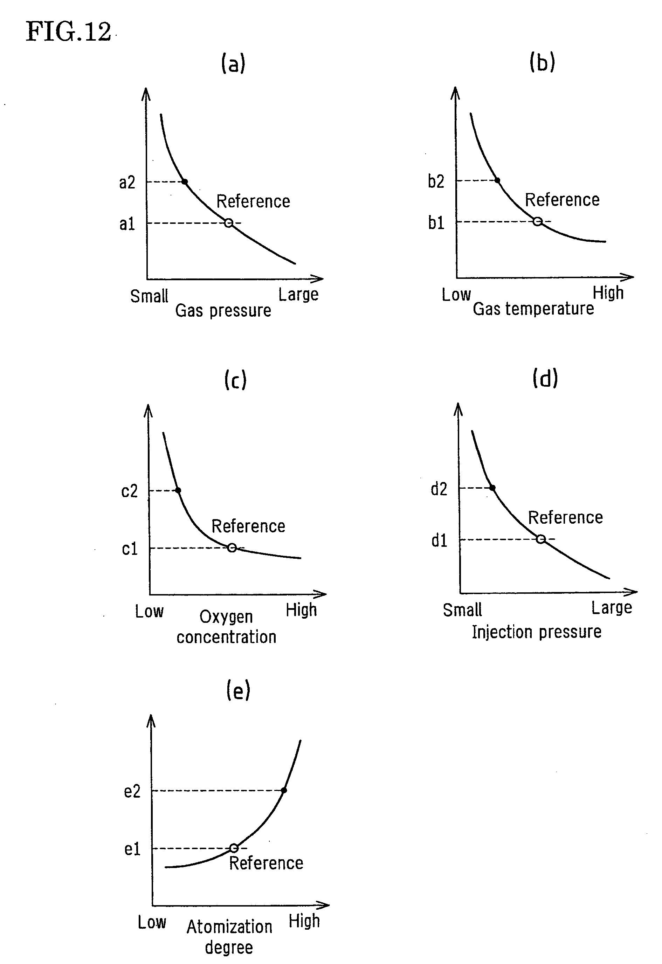

(s2) A gas pressure correction coefficient αa is obtained with reference to a correction map shown in FIG. 12(a). In the correction map of FIG. 12(a), when a map value at a reference in-cylinder gas pressure specified in advance is "a1", and a map value at the actual in-cylinder gas pressure calculated at step ST105 is "a2", then the gas pressure correction coefficient αa can be obtained from [αa = a2/a1].

(s3) A gas temperature correction coefficient αb is obtained with reference to a correction map shown in FIG. 12(b). In the correction map of FIG. 12(b), when a map value at a reference in-cylinder gas temperature specified in advance is "b1", and a map value at the actual in-cylinder gas temperature calculated at step ST105 is "b2", then the gas temperature correction coefficient αb can be obtained from [αb = b2/b1]

(s4) An oxygen concentration correction coefficient αc is obtained with reference to a correction map shown in FIG. 12(c). In the correction map of FIG. 12(c), when a map value at a reference in-cylinder oxygen concentration specified in advance is "c1", and a map value at the actual in-cylinder oxygen concentration calculated at step ST105 is "c2", then the oxygen concentration correction coefficient αc can be obtained from [αc = c2/cl].

(s5) An injection pressure correction coefficient βd is obtained with reference to a correction map shown in FIG. 12(d). In the correction map of FIG. 12(d), when a map value at a reference injection pressure specified in advance is "d1", and a map value at the actual fuel injection pressure calculated at step ST106 is "d2", then the injection pressure correction coefficient βd can be obtained from [βd = d2/d1]. It is noted that when the fuel injection pressure is excessively high, a combustion delay can occur due to excessive diffusion, wall surface attachment, and the like; therefore, when the injection pressure is in an excessively high state, the injection pressure correction coefficient βd is corrected to the increasing side in accordance with the degree of the state.

(s6) An atomization degree correction coefficient βe is obtained with reference to a correction map shown in FIG. 12(e). In the correction map of FIG. 12(e), when a map value at a reference atomization degree specified in advance is "e1", and a map value at the actual fuel atomization degree calculated at step ST106 is "e2", then the atomization degree correction coefficient βe can be obtained from [βe = e2/e1].

(s7) A required preheating combustion period tp-c [msec] is calculated by multiplying the basic preheating combustion period tbas obtained at the above-described processing (s1) by the gas pressure correction coefficient αa, the gas temperature correction coefficient αb, the oxygen concentration correction coefficient αc, the injection pressure correction coefficient βd, and the atomization degree correction coefficient βe, which are respectively calculated at the processing (s2) to (s6) (tp-c = tbas × αa × αb × αc × βd × βe).

At step ST108, an engine revolution Ne is calculated from an output signal of the crank position sensor 40.

At step ST109, using the engine revolution Ne calculated at step ST108, the required preheating combustion period tp-c [msec] calculated at step ST107 is converted into a required preheating combustion angle period θp-c [°CA] (θp-c [°CA] = tp-c [msec] × [Ne × 360 [°CA]/60 × 10³ [msec]]).

At step ST110, a combustion ignition time associated with the auxiliary injection (ignition time of the auxiliary combustion) Ap-ig [Ap-ig = Am-ig - θp-c] is calculated using the required ignition time Am-ig [° CA] of the main combustion calculated at step ST101 and using the required preheating combustion angle period θp-c [° CA] calculated at step ST109 (see FIG. 8).

At step ST111, an ignition delay period (angle period) θdp [° CA] of the auxiliary injection is calculated based on the in-cylinder gas states (pressure, temperature, oxygen concentration) recognized at step ST105, and an injection start time Tps-ig [° CA] (Tps-ig = Ap-ig - θdp) of the auxiliary injection shown in FIG. 8 is calculated (determined) using the ignition delay period θdp and the ignition time Ap-ig [° CA] of the auxiliary combustion, which is calculated at step ST110. A calculation method of the ignition delay period θdp will be described later.

It is noted that with respect to the main injection, an ignition delay period (angle period) θdm [° CA] of the main injection is calculated based on the in-cylinder gas states (pressure, temperature, oxygen concentration) recognized at step ST105, and an injection start time Tms-ig [° CA] (Tms-ig = Am-ig [° CA] - θdm [° CA]) of the main injection shown in FIG. 8 is calculated using the ignition delay period θdm and the required ignition time Am-ig [° CA] of the main combustion.

As has been described hereinbefore, according to this example, the fuel injection amount (total fuel input amount) of the auxiliary injection is determined from a preheating amount (preheating input fuel amount) at which the required ignition temperature (for example, 1000K) of the main combustion is achievable, and from a premixed amount (premixed combustion input fuel amount) at which soot and combustion noise can be reduced. This ensures simultaneous fulfillment of the demands of securement of a required preheating amount associated with the auxiliary injection, and of the reduction of exhaust emissions.

Furthermore, the preheating combustion period (combustion period between the auxiliary combustion ignition time and the premixed combustion) that is set in association with the required ignition time of the main combustion is calculated (corrected) in accordance with the in-cylinder gas states (pressure, temperature, oxygen concentration) determined at the time of closing the intake valve 16, and also in accordance with the fuel spray states (fuel injection pressure, fuel atomization degree) so as to determine the injection time of the auxiliary injection. This ensures that even during a transitional period of operation and the like, the end time of the preheating combustion period (premixed combustion start time) matches the ignition time of the main combustion. This, in turn, ensures constantly appropriate premixed combustion and achieves reduced exhaust emissions and stable combustion.

While in the above example the preheating combustion period is calculated according to the in-cylinder gas states (pressure, temperature, oxygen concentration) and the fuel spray states (fuel injection pressure, fuel atomization degree), this should not be construed in a limiting sense. It is also possible to calculate (correct) the preheating combustion period according to the in-cylinder gas states (pressure, temperature, oxygen concentration) alone, or calculate (correct) the preheating combustion period according to the fuel spray states (fuel injection pressure, fuel atomization degree) alone.

### -Fuel Injection Control-

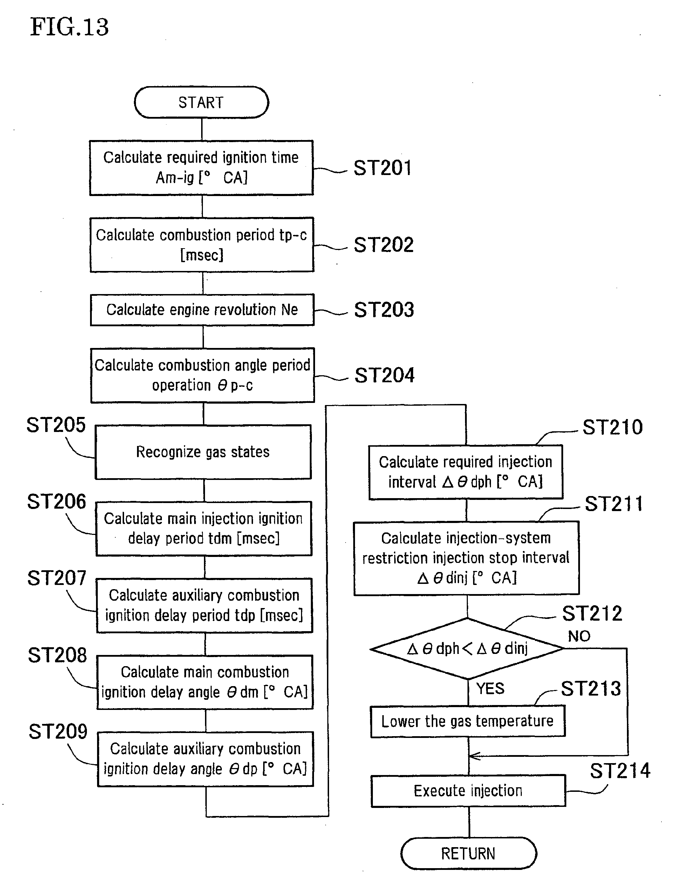

Next, one example of fuel injection control will be described by referring to a flowchart of FIG. 13. A control routine of FIG. 13 is repeatedly executed for each predetermined crank angle (each cylinder) in the ECU 100. To be specific, taking one cylinder as an example, each time the combustion stroke in the cylinder is executed, the control routine of FIG. 13 is executed prior to the combustion stroke.

When the control routine of FIG. 13 starts, a required ignition time Am-ig [° CA] of the main combustion is calculated at step ST201, and a required preheating combustion period tp-c [msec] is calculated at step ST202. The processing at step ST201 and step 202 is similar to the processing at step ST101 through step ST107, and therefore detailed description will be omitted.

At step ST203, an engine revolution Ne is calculated from an output signal of the crank position sensor 40.

At step ST204, using the engine revolution Ne calculated at step ST203, the required preheating combustion period tp-c [msec] calculated at step ST202 is converted into a required preheating combustion angle period θp-c [°CA] (θp-c [°CA] = tp-c [msec] × [Ne × 360 [°CA]/60 × 10³ [msec]).

At step ST205, the in-cylinder gas states (pressure, temperature, oxygen concentration) at the time of closing the intake valve 16 (before fuel injection) are recognized. The in-cylinder gas pressure, in-cylinder gas temperature, and in-cylinder oxygen concentration can be recognized with similar processing to the processing at step ST105 of FIG. 7 described above. It is noted that when the required preheating combustion period tp-c is calculated at step ST202, the in-cylinder gas states (pressure, temperature, oxygen concentration) are recognized (recognized with the processing at step ST105 of FIG. 7), and therefore, these in-cylinder gas state (pressure, temperature, oxygen concentration) may be utilized.

At step ST206, an ignition delay period tdm [msec] of the main injection is calculated based on the in-cylinder gas states (pressure, temperature, oxygen concentration) recognized at step ST205.

In this respect, the ignition delay period of the main injection correlates with the in-cylinder gas states (pressure, temperature, oxygen concentration). Hence, the ignition delay period of the main injection tdm [msec] may be obtained, for example, by acquiring beforehand a relationship between the in-cylinder gas states and the ignition delay period by experiments, calculations, and the like, and by calculating the ignition delay period of the main injection tdm [msec], based on the resulting relationship and using a map wherein empirically adapted values are mapped with parameters being the in-cylinder gas states.

At step ST207, an ignition delay period tdp [msec] of the auxiliary combustion (auxiliary injection) is calculated based on the in-cylinder gas states (pressure, temperature, oxygen concentration) recognized at step ST205. It is noted that since the ignition delay period of the auxiliary combustion also correlates with the in-cylinder gas states (pressure, temperature, oxygen concentration), the ignition delay period tdp [msec] of the auxiliary combustion may be calculated in the same manner as the ignition delay period of the main injection described above, based on the in-cylinder gas state with reference to the map.

At step ST208, using the engine revolution Ne calculated at step ST203, the ignition delay period tdm [msec] of the main injection calculated at step ST206 is converted into a main combustion ignition delay angle θdm [°CA] (θdm [°CA] = tdm [msec] × [Ne × 360 [°CA]/60 × 10³ [msec]).

At step ST209, using the engine revolution Ne calculated at step ST203, the ignition delay period tdp [msec] of the auxiliary combustion calculated at step ST207 is converted into an auxiliary combustion ignition delay angle θdp [° CA] (θdp [° CA] = tdp [msec] × [Ne × 360 [°CA]/60 × 10³ [msec]).

At step ST210, a required injection interval Δθdph [°CA] shown in FIG.8 is calculated in the manner described below.

(s11) The ignition time Ap-ig [° CA] (Ap-ig = Am-ig - Op-c) of the auxiliary combustion shown in FIG. 8 is calculated using the required ignition time Am-ig [° CA] of the main combustion calculated at step ST 201, and using the required preheating combustion angle period θp-c [° CA] calculated at step ST204.

(s12) The injection start time Tps-ig [° CA] (Tps-ig = Ap-ig - θdp) of the auxiliary injection shown in FIG. 8 is calculated using the ignition time Ap-ig [° CA] of the auxiliary combustion and the auxiliary combustion ignition delay angle θdp [° CA] calculated at step ST 209.

(s13) An injection period (injection start time to injection end time) of the auxiliary injection is calculated based on the fuel injection amount (total fuel input amount) Qp of the auxiliary injection and injection characteristics (fuel injection amount per unit time, and the like) of the injector 23. An injection end time Tpe-ig [° CA] (Tpe-ig = Tps-ig + injection period of the auxiliary injection) of the auxiliary injection shown in FIG. 8 is calculated using the injection period [° CA] of the auxiliary injection and the injection start time Tps-ig [° CA] of the auxiliary injection.

(s14) The injection start time Tms-ig [° CA] (Tms-ig = Am-ig - θdm) of the main injection shown in FIG. 8 is calculated using the required ignition time Am-ig [° CA] of the main combustion calculated at step ST201 and the main combustion ignition delay angle θdm [° CA] calculated at step ST208.

(s15) A period ranging from the injection end time of the auxiliary injection to the injection start time of the main injection according to arithmetic operations, that is, the required injection interval Δθdph [° CA] (Δθdph = |Tpe-ig - Tms-ig|) shown in FIG. 8 is calculated using the injection end time Tpe-ig [° CA] of the auxiliary injection calculated at the processing (s13) described above and using the injection start time Tms-ig [° CA] of the main injection calculated at the processing (s14) described above.

Next, at step ST211, an injection-system restriction injection stop interval Δθdinj [° CA] is calculated. The injection-system restriction injection stop interval Δθdinj is an injection stop period that is associated with injection characteristics (shortest period from when the valve of the injector 23 is closed until the valve starts opening) and that is necessary for securing the precision of injection-system parts such as the injector 23, and for protecting an injection pulse output drive circuit. The injection-system restriction injection stop interval Δθdinj can be obtained with a map, a mathematical formula, or the like with operating states such as engine revolution Ne and fuel injection pressure used as parameters. It is noted that the injection-system restriction injection stop interval Δθdinj may be a fixed value (constant value).

Then, at step ST212, the required injection interval Δθdph calculated at step ST210 and the injection-system restriction injection stop interval Δθdinj calculated at step ST211 are compared. When the required injection interval Δθdph is equal to or more than the injection-system restriction injection stop interval Δθdinj (Δθdph ≥ Δθdinj) (when the determination result at step ST212 is negative determination (NO)), an injection is executed in an injection form as required (injection form based on the injection start time Tps-ig of the auxiliary injection and the injection start time Tms-ig of the main injection, which are calculated at step ST210) (step ST214).

Meanwhile, when the determination result at step ST212 is positive determination (YES), and the required injection interval Δθdph is shorter than the injection-system restriction injection stop interval Δθdinj (in the case of Δθdph < Δθdinj), then the injection start time of the auxiliary injection is shifted to a point of time resulting from subtracting the injection-system restriction injection stop interval Δθdinj from the injection start time Tms-ig of the main injection (Tms-ig-Δθdinj). At the same time, the in-cylinder gas temperature is decreased (for example, a decrease in gas temperature due to an increase in the EGR amount) (step ST213), and then the auxiliary injection and the main injection are executed (step ST214).

As has been described hereinbefore, according to the fuel injection control of this example, when the required injection interval Δθdph according to the arithmetic operations is shorter than the injection-system restriction injection stop interval Δθdinj associated with injection characteristics, then the injection stop interval between the auxiliary injection and the main injection is set at the injection-system restriction injection stop interval Δθdinj, so as to secure precision of the injection-system parts and protect the injection pulse output drive circuit. Although this causes the end time of the preheating combustion generated by the fuel injection in the auxiliary injection to be on the advance angle side relative to the required ignition time of the main injection, the preheating combustion period is extended by operating the in-cylinder gas temperature on a low side, as described above, so that the end time of the preheating combustion can match the required ignition time of the main combustion (for example, TDC). This ensures an appropriate preheating amount and appropriate premixed combustion for the ignition time of the main combustion while securing precision of the injection-system parts and protecting the injection pulse output drive circuit.

In the above example, when the required injection interval Δθdph is shorter than the injection-system restriction injection stop interval Δθdinj associated with injection characteristics, the preheating combustion period is extended by controlling the in-cylinder gas temperature. This should not be construed in a limiting sense; it is also possible to extend the preheating combustion period by controlling any one parameter of in-cylinder gas pressure, in-cylinder oxygen concentration, and fuel injection pressure. Alternatively, it is also possible to extend the preheating combustion period by controlling a plurality of parameters among in-cylinder gas pressure, in-cylinder gas temperature, in-cylinder oxygen concentration, and fuel injection pressure. Furthermore, it is also possible to extend the preheating combustion period by controlling all the parameters, which are in-cylinder gas pressure, in-cylinder gas temperature, in-cylinder oxygen concentration, and fuel injection pressure.

It is noted that the in-cylinder gas pressure can be adjusted by controlling the opening degree (VN opening degree) of a nozzle vane disposed in the variable nozzle vane mechanism 54 of the turbocharger 5. The in-cylinder gas temperature and the in-cylinder oxygen concentration can be adjusted by controlling the opening degree of the EGR valve 81 (control of the EGR amount).

### -Other Embodiments-

The above example describes a case where the present invention is applied to a common rail in-cylinder direct injection multi-cylinder (four-cylinder) diesel engine. The present invention is not limited to this example and can be applied to other diesel engines with any number of cylinders, e.g., a 6-cylinder diesel engine. Also, engines to which the present invention can be applied should not be limited to automobile engines.

The above example describes the engine 1 employing the piezo injector 23 that changes the fuel injection rate by turning into a full-open valve state only during an energized period. The present invention can also be applied to engines employing variable injection rate injectors.

The above example describes the maniveter 77 including the NSR catalyst 75 and the DPNR catalyst 76. The maniverter 77 may include the NSR catalyst 75 and a DPF (Diesel Particulate Filter).

### Industrial Applicability

The present invention can be used for a fuel injection control apparatus of an internal combustion engine typified by a diesel engine, and more particularly, can be effectively used for a fuel internal injection apparatus of a compression self-igniting internal combustion engine in which auxiliary injection can be executed prior to the main injection from a fuel injection valve.

### Description of the Reference Numeral

- 1: Engine (internal combustion engine)
- 3: Combustion chamber
- 5: Turbocharger
- 54: Variable Nozzle Vane Mechanism
- 16: Intake valve
- 17: Exhaust valve
- 22: Common rail
- 23: Injector (fuel injection valve)
- 40: Crank position sensor
- 41: Rail pressure sensor
- 49: Intake temperature sensor
- 81: EGR valve
- 100: ECU

## Claims

1. A fuel injection control apparatus of an internal combustion engine, the apparatus being applied to control of a compression self-igniting internal combustion engine in which fuel injected into a cylinder from a fuel injection valve combusts in the cylinder, and being configured to perform at least a main injection for main combustion and an auxiliary injection executed prior to the main injection, as operations of fuel injection from the fuel injection valve, the fuel injection control apparatus comprising:
an auxiliary injection fuel amount calculating unit configured to obtain a fuel injection amount of the auxiliary injection from a preheating fuel amount for satisfying a required ignition temperature of the main combustion and a premixed combustion fuel amount for reducing exhaust emissions;
a preheating combustion period calculating unit configured to obtain a preheating combustion period based on the preheating fuel amount in accordance with at least any one state of an in-cylinder gas state before fuel injection and a fuel spray state; and
an auxiliary injection time determining unit configured to determine an injection start time of the auxiliary injection based on a required ignition time of the main combustion, the preheating combustion period, and an ignition delay period ranging from fuel injection in the auxiliary injection to occurrence of ignition.

2. The fuel injection control apparatus of the internal combustion engine according to claim 1, wherein the preheating combustion period calculating unit is configured to obtain a basic preheating combustion period from the preheating fuel amount, and configured to correct the basic preheating combustion period in accordance with at least any one state of the in-cylinder gas state and the fuel spray state, so as to obtain the preheating combustion period.

3. The fuel injection control apparatus of the internal combustion engine according to claim 2, wherein when obtaining the preheating combustion period in accordance with the in-cylinder gas state and the fuel spray state based on the preheating fuel amount, the preheating combustion period calculating unit is configured to obtain a correction coefficient relating to the gas state from a reference in-cylinder gas state specified in advance and an actual in-cylinder gas state, configured to obtain a correction coefficient relating to the spray state from a reference fuel spray state specified in advance and an actual fuel spray state, and configured to multiply the basic preheating combustion period obtained from the preheating fuel amount by the correction coefficient relating to the gas state and the correction coefficient relating to the spray state, so as to obtain the preheating combustion period.

4. The fuel injection control apparatus of the internal combustion engine according to any one of claims 1 to 3, wherein parameters relating to the in-cylinder gas state are in-cylinder gas pressure, an in-cylinder gas temperature, and an in-cylinder oxygen concentration.

5. The fuel injection control apparatus of the internal combustion engine according to any one of claims 1 to 3, wherein parameters relating to the fuel spray state are a fuel injection pressure and a fuel atomization degree.

6. The fuel injection control apparatus of the internal combustion engine according to any one of claims 1 to 5, wherein the auxiliary injection time determining unit is configured to set the ignition delay period of the auxiliary injection in accordance with the in-cylinder gas state before fuel injection.

7. The fuel injection control apparatus of the internal combustion engine according to any one of claims 1 to 6, wherein the premixed combustion fuel amount is determined in consideration of a reduction of soot and a reduction of combustion noise.

8. The fuel injection control apparatus of the internal combustion engine according to any one of claims 1 to 7, wherein the fuel injection control apparatus is configured to: obtain an injection end time of the auxiliary injection from the injection start time of the auxiliary injection determined by the auxiliary injection time determining unit and from an injection period that is based on the fuel injection amount of the auxiliary injection obtained by the auxiliary injection fuel amount calculating unit; obtain an injection start time of the main injection from the required ignition time of the main combustion and an ignition delay period of the main combustion; compare a required injection interval, which is between the injection start time of the auxiliary injection and the injection start time of the main combustion and which results from arithmetic operations used to obtain the foregoing periods, with an injection-system restriction injection stop interval that is necessary from an injection end time of the auxiliary injection to an injection start time of the main injection in an actual fuel injection; and adjust, when the required injection interval is shorter than the injection-system restriction injection stop interval, at least any one state of the in-cylinder gas state and the fuel spray state so as to increase an actual preheating combustion period.

9. The fuel injection control apparatus of the internal combustion engine according to claim 8, wherein when the required injection interval is shorter than the injection-system restriction injection stop interval, the fuel injection control apparatus is configured to adjust any one parameter, or a combination of more than one parameters, selected from the group of the in-cylinder gas pressure, the in-cylinder gas temperature, the in-cylinder oxygen concentration, and the fuel injection pressure so as to increase the actual preheating combustion period.

## Patentansprüche

1. Kraftstoffeinspritzsteuergerät einer Brennkraftmaschine, wobei das Gerät verwendet wird, um eine druckselbstzündende Brennkraftmaschine zu steuern, in der von einem Kraftstoffeinspritzventil in einen Zylinder eingespritzte Kraftstoff in dem Zylinder verbrennt, und gestaltet ist, mindestens eine Haupteinspritzung zur Hauptverbrennung und eine Hilfseinspritzung, die vor der Haupteinspritzung durchgeführt wird, als Kraftstoffeinspritzvorgänge von dem Kraftstoffeinspritzventil durchzuführen, wobei das Kraftstoffeinspritzsteuergerät aufweist:
eine Einheit zum Berechnen einer Hilfseinspritzkraftstoffmenge, die gestaltet ist, eine Kraftstoffeinspritzmenge der Hilfseinspritzung von einer Vorheizkraftstoffmenge zum Erfüllen einer erforderlichen Zündtemperatur der Hauptverbrennung und eine vorvermischte Verbrennungskraftstoffmenge zum Reduzieren von Abgasemissionen zu ermitteln;
eine Einheit zum Berechnen des Vorheizverbrennungszeitraums, die gestaltet ist, einen Vorheizverbrennungszeitraum auf der Grundlage der Vorheizkraftstoffmenge gemäß mindestens irgendeines Zustands von einem In-Zylindergaszustand vor Kraftstoffeinspritzung und einem Kraftstoffsprayzustand zu ermitteln; und
eine Einheit zum Bestimmen einer Hilfseinspritzzeit, die gestaltet ist, eine Einspritzstartzeit der Hilfseinspritzung auf der Grundlage der erforderlichen Zündzeit der Hauptverbrennung, des Vorheizverbrennungszeitraums und des Zündverzögerungszeitraums, der von der Kraftstoffeinspritzung in der Hilfseinspritzung bis zum Auftreten einer Zündung reicht, zu bestimmen.

2. Kraftstoffeinspritzsteuergerät der Brennkraftmaschine nach Anspruch 1, wobei die Einheit zum Berechnen des Vorheizverbrennungszeitraums gestaltet ist, einen Grundvorheizverbrennungszeitraum von der Vorheizkraftstoffmenge zu ermitteln, und gestaltet ist, den Grundvorheizverbrennungszeitraum gemäß mindestens irgendeines Zustands von dem In-Zylindergaszustand und dem Kraftstoffsprayzustand zu korrigieren, um so den Vorheizverbrennungszeitraum zu ermitteln.

3. Kraftstoffeinspritzsteuergerät der Brennkraftmaschine nach Anspruch 2, wobei, wenn der Vorheizverbrennungszeitraum gemäß dem In-Zylindergaszustand und dem Kraftstoffsprayzustand auf der Grundlage der Vorheizkraftstoffmenge ermittelt wird, die Einheit zum Berechnen des Vorheizverbrennungszeitraums gestaltet ist, einen Korrekturkoeffizienten bezüglich des Gaszustands von einem Bezugs-In-Zylindergaszustand, der im Voraus bestimmt worden ist, und einem eigentlichen In-Zylindergaszustand zu ermitteln, gestaltet ist, einen Korrekturkoeffizienten bezüglich des Sprayzustands von einem Bezugskraftstoffsprayzustand, der im Voraus bestimmt worden ist, und einem eigentlichen Kraftstoffsprayzustand zu ermitteln, und gestaltet ist, den Grundvorheizverbrennungszeitraum, der von der Vorheizkraftstoffmenge ermittelt worden ist, mit dem Korrekturkoeffizienten bezüglich des Gaszustands und dem Korrekturkoeffizienten bezüglich des Sprayzustands zu multiplizieren, um so den Vorheizverbrennungszeitraum zu ermitteln.

4. Kraftstoffeinspritzsteuergerät der Brennkraftmaschine nach irgendeinem der Ansprüche 1 bis 3, wobei Parameter bezüglich des In-Zylindergaszustands ein In-Zylindergasdruck, eine In-Zylindergastemperatur und eine In-Zylindersauerstoffkonzentration sind.

5. Kraftstoffeinspritzsteuergerät der Brennkraftmaschine nach irgendeinem der Ansprüche 1 bis 3, wobei Parameter bezüglich des Kraftstoffsprayzustands ein Kraftstoffeinspritzdruck und ein Kraftstoffzerstäubungsgrad sind.

6. Kraftstoffeinspritzsteuergerät der Brennkraftmaschine nach irgendeinem der Ansprüche 1 bis 5, wobei die Einheit zum Bestimmen einer Hilfseinspritzzeit gestaltet ist, den Zündverzögerungszeitraum der Hilfseinspritzung gemäß dem In-Zylindergaszustand vor der Kraftstoffeinspritzung festzusetzen.

7. Kraftstoffeinspritzsteuergerät der Brennkraftmaschine nach irgendeinem der Ansprüche 1 bis 6, wobei die vorvermischte Verbrennungskraftstoffmenge unter Berücksichtigung einer Russreduzierung und einer Verbrennungsgeräuschreduzierung bestimmt ist.

8. Kraftstoffeinspritzsteuergerät der Brennkraftmaschine nach irgendeinem der Ansprüche 1 bis 7, wobei das Kraftstoffeinspritzsteuergerät gestaltet ist: eine Einspritzendzeit der Hilfseinspritzung von der Einspritzstartzeit der Hilfseinspritzung, die von der Einheit zum Bestimmen der Hilfseinspritzzeit bestimmt worden ist, und von einem Einspritzzeitraum, auf der Grundlage der Kraftstoffeinspritzmenge der Hilfseinspritzung, die von der Einheit zum Berechnen der Hilfseinspritzkraftstoffmenge ermittelt worden ist, zu ermitteln; eine Einspritzstartzeit der Haupteinspritzung von der erforderlichen Zündzeit der Haupteinspritzung und einem Zündverzögerungszeitraum der Hauptverbrennung zu ermitteln; ein erforderliches Einspritzintervall, das zwischen der Einspritzstartzeit der Hilfseinspritzung und der Einspritzstartzeit der Hauptverbrennung ist und das aus den Rechenvorgängen resultiert, die zum Ermitteln der vorangegangenen Zeiträume verwendet wurden, mit einem Einspritzsystembeschränkungseinspritzstoppintervall zu vergleichen, das von einer Einspritzendzeit der Hilfseinspritzung bis zu einer Einspritzstartzeit der Haupteinspritzung in einer eigentlichen Kraftstoffeinspritzung erforderlich ist; und, wenn das erforderliche Einspritzintervall kürzer ist als das Einspritzsystembeschränkungseinspritzstoppintervall, mindestens irgendeinen Zustand von dem In-Zylindergaszustand und dem Kraftstoffsprühzustand einzustellen, um so einen eigentlichen Vorheizverbrennungszeitraum zu erhöhen.

9. Kraftstoffeinspritzsteuergerät der Brennkraftmaschine nach Anspruch 8, wobei, wenn das erforderliche Einspritzintervall kürzer ist als das Einspritzsystembeschränkungseinspritzstoppintervall, das Kraftstoffeinspritzsteuergerät gestaltet ist, irgendeinen der Parameter oder eine Kombination von mehr als einem Parameter, ausgewählt aus der Gruppe des In-Zylindergasdrucks, der In-Zylindergastemperatur, der In-Zylindersauerstoffkonzentration und des Kraftstoffeinspritzdrucks, einzustellen, um so den eigentlichen Vorheizverbrennungszeitraum zu erhöhen.

## Revendications

1. Appareil de commande d'injection de carburant d'un moteur à combustion interne, l'appareil étant appliqué à la commande d'un moteur à combustion interne à autoallumage par compression dans lequel le carburant injecté dans un cylindre à partir d'une soupape d'injection de carburant brûle dans le cylindre, et étant configuré pour réaliser au moins une injection principale pour une combustion principale et une injection auxiliaire réalisée exécutée avant l'injection principale, comme opérations d'injection de carburant à partir de la soupape d'injection de carburant, l'appareil de commande d'injection de carburant comportant :
une unité de calcul de quantité d'injection de carburant auxiliaire configurée pour obtenir une quantité d'injection de carburant de l'injection auxiliaire à partir d'une quantité de carburant de préchauffage afin de satisfaire une température d'allumage requise de la combustion principale et d'une quantité de carburant de combustion pré-mélangée afin de réduire les émissions d'échappement ;
une unité de calcul de période de combustion de préchauffage configurée pour obtenir une période de combustion de préchauffage sur la base de la quantité de carburant de préchauffage en fonction d'au moins un état quelconque d'un état de gaz dans le cylindre avant injection de carburant et un état de pulvérisation de carburant ; et
une unité de détermination de temps d'injection auxiliaire configurée pour déterminer un temps de début d'injection de l'injection auxiliaire sur la base d'un temps d'allumage requis de la combustion principale, de la période de combustion de préchauffage, et d'une période de retard d'allumage s'étendant depuis l'injection de carburant dans l'injection auxiliaire jusqu'à l'apparition de l'allumage.

2. Appareil de commande d'injection de carburant du moteur à combustion interne selon la revendication 1, dans lequel l'unité de calcul de période de combustion de préchauffage est configurée pour obtenir une période de combustion de préchauffage de base de la quantité de carburant de préchauffage, et configurée pour corriger la période de combustion de préchauffage de base en fonction d'au moins un état quelconque de l'état de gaz dans le cylindre et de l'état de pulvérisation de carburant, de façon à obtenir la période de combustion de préchauffage.

3. Appareil de commande d'injection de carburant du moteur à combustion interne selon la revendication 2, dans lequel, lors de l'obtention de la période de combustion de préchauffage en fonction de l'état de gaz dans le cylindre et de l'état de pulvérisation de carburant sur la base de la quantité de carburant de préchauffage, l'unité de calcul de période de combustion de préchauffage est configurée pour obtenir un coefficient de correction se rapportant l'état de gaz à partir d'un état de gaz dans le cylindre de référence spécifié à l'avance et d'un état réel de gaz dans le cylindre, configurée pour obtenir un coefficient de correction se rapportant à l'état de pulvérisation à partir d'un état de pulvérisation de carburant de référence spécifié à l'avance et d'un état réel de pulvérisation de carburant, et configurée pour multiplier la période de combustion de préchauffage de base obtenue à partir de la quantité de carburant de préchauffage par le coefficient de correction se rapportant à l'état de gaz et le coefficient de correction se rapportant à l'état de pulvérisation, de façon à obtenir la période de combustion de préchauffage.

4. Appareil de commande d'injection de carburant du moteur à combustion interne selon l'une quelconque des revendications 1 à 3, dans lequel les paramètres se rapportant à l'état de gaz dans le cylindre sont la pression de gaz dans le cylindre, une température de gaz dans le cylindre, et une concentration en oxygène dans le cylindre.

5. Appareil de commande d'injection de carburant du moteur à combustion interne selon l'une quelconque des revendications 1 à 3, dans lequel les paramètres se rapportant à l'état de pulvérisation de carburant sont une pression d'injection de carburant et un degré d'atomisation de carburant.

6. Appareil de commande d'injection de carburant du moteur à combustion interne selon l'une quelconque des revendications 1 à 5, dans lequel l'unité de détermination de temps d'injection auxiliaire est configurée pour établir la période de retard d'allumage de l'injection auxiliaire en fonction de l'état de gaz dans le cylindre avant injection de carburant.

7. Appareil de commande d'injection de carburant du moteur à combustion interne selon l'une quelconque des revendications 1 à 6, dans lequel la quantité de carburant de combustion pré-mélangée est déterminée compte tenu d'une réduction de suie et d'une réduction de bruit de combustion.

8. Appareil de commande d'injection de carburant du moteur à combustion interne selon l'une quelconque des revendications 1 à 7, dans lequel l'appareil de commande d'injection de carburant est configuré pour : obtenir un temps de fin d'injection de l'injection auxiliaire à partir du temps de début d'injection de l'injection auxiliaire déterminé par l'unité de détermination de temps d'injection auxiliaire et à partir d'une période d'injection qui est basée sur la quantité d'injection de carburant de l'injection auxiliaire obtenue par l'unité de calcul auxiliaire de quantité de carburant d'injection ; obtenir un temps de début d'injection de l'injection principale à partir du temps d'allumage requis de la combustion principale et d'une période de retard d'allumage de la combustion principale ; comparer un intervalle requis d'injection, qui est entre le temps de début d'injection de l'injection auxiliaire et le temps de début d'injection de la combustion principale et qui résulte d'opérations arithmétiques utilisées pour obtenir les périodes précédentes, avec un intervalle d'arrêt d'injection de limitation de système d'injection qui est nécessaire depuis un temps de fin d'injection de l'injection auxiliaire jusqu'à un temps de début d'injection de l'injection principale dans une injection de carburant réelle ; et ajuster, quand l'intervalle d'injection requis est plus court que l'intervalle d'arrêt d'injection de limitation de système d'injection, au moins un état quelconque de l'état de gaz dans le cylindre et de l'état de pulvérisation de carburant de façon à augmenter une période de combustion de préchauffage réelle.

9. Appareil de commande d'injection de carburant du moteur à combustion interne selon la revendication 8, dans lequel, quand l'intervalle d'injection requis est plus court que l'intervalle d'arrêt d'injection de restriction d'injection-système, l'appareil de commande d'injection de carburant est configuré pour ajuster l'un quelconque d'un paramètre, ou une combinaison de plus d'un paramètre, choisi dans le groupe de la pression de gaz dans le cylindre, de la température de gaz dans le cylindre, de la concentration en oxygène dans le cylindre, et de la pression d'injection de carburant de façon à augmenter la période de combustion de préchauffage réelle.
